# DEMANDE DE BREVET EUROPEEN

(11) **EP 1 121 848 A1**
(43) Date de publication de la demande: **08.08.2001**
(21) Numéro de dépôt: 00870012.2
(22) Date de dépôt: 01.02.2000
(51) Int. Cl.: A01C 23/04, A01C 3/06, A01C 23/00

(54) **Surcompresseur pour épandeur de liquide**

(71) Demandeur: ETS JOSKIN S.A., B-4630 Soumagne (BE)
(72) Inventeur: Joskin, Victor, 4633 Melin-Soumagne (BE)
(74) Mandataire: Van Malderen, Michel

(57) **Abrégé**

La présente invention concerne un épandeur de lisier ou autres matières d'épandage liquides (16) ; mettant en oeuvre, en mode d'épandage, un compresseur (2) comprimant le liquide (16) dans une cuve (6) dont la pression interne d'air est limitée à une valeur inférieure à 0,5 bar par au moins une soupape (3,7) ; et un dispositif de surcompression (10) entraîné par un moteur (11) caractérisé en ce que ledit dispositif de surcompression (10) est placé en liaison immédiate avec la sortie de cuve (8) et que ledit dispositif de surcompression (10) augmente la pression exercée sur le liquide (16) dans la conduite (13) par rapport à la pression qui est exercée sur le liquide dans la cuve (6).

## Description

### Objet de l'invention

La présente invention se rapporte aux épandeurs de lisier et autres matières d'épandage liquides, équipés d'un système de vidange par pression d'air sur le liquide contenu dans la cuve de stockage.

Elle concerne en particulier un dispositif de surcompression conçu pour augmenter la pression exercée sur le liquide à la sortie de la cuve de stockage.

### Etat de la technique

Une bonne partie des épandeurs de lisier connus sont constitués de cuves fonctionnant, tant en remplissage qu'en épandage, à l'aide d'une pompe volumétrique. L'inconvénient de ce système est que le lisier, matière extrêmement corrosive et pouvant contenir des corps solides tels que des cailloux, doit traverser la pompe, avec tous les risques d'usure accélérée que cela comporte.

C'est pourquoi, l'autre partie des épandeurs de lisier connus, les épandeurs dits « à pression », utilisent un aspirateur-compresseur modifiant la pression interne de la citerne de stockage pour soit y aspirer le lisier en vue de le charger, soit l'en refouler pour l'épandre. Ainsi, on évite le passage du lisier au travers d'une pompe.

Or, avec l'entrée en vigueur de la Directive Européenne 97/23 CE relative aux équipements sous pression, les citernes de stockage des épandeurs de lisier fonctionnant suivant ce principe, ne peuvent plus être soumises à des pressions égales ou supérieures à 0,5 bar, sous peine de devoir soumettre la fabrication de chaque cuve à des procédures supplémentaires de contrôle par un organisme agréé et à bien d'autres formalités. De plus, toujours selon la Directive précitée, le fait de travailler à des pressions allant de 0,5 à 0,9 bar, comme c'est le cas dans l'état de la technique, contraindrait les fabricants à revoir complètement la conception des épandeurs. En effet, la nécessité éventuelle d'utiliser non plus des fonds plats, mais des fonds bombés, modifie complètement les données dimensionnelles de telles installations, en particulier leur encombrement.

Il en résulterait immanquablement une augmentation drastique du coût de fabrication par rapport au coût actuel, incompatible avec le prix que le marché est disposé à accepter pour de tels engins.

### Buts de l'invention

Un objet de l'invention est de rendre possible la construction d'un épandeur à pression dont la surpression d'air exercée dans la cuve de stockage n'atteindrait pas 0,5 bar, la surpression complémentaire nécessaire au bon fonctionnement du dispositif d'épandage étant créée à l'extérieur de la citerne de stockage proprement dite.

Un deuxième objet de l'invention, découlant du premier, vise à conserver la possibilité de réglage du débit d'épandage en réglant le flux d'air de compression.

Un troisième objet de l'invention est de permettre la fabrication de cuves de stockage pour épandeurs de lisier qui soient bon marché et compatibles avec la législation en vigueur en matière de pression dans les cuves.

### Eléments caractéristiques de l'invention

La présente invention se rapporte à un épandeur de lisier ou autres matières d'épandage liquides ; mettant en oeuvre, en mode d'épandage, un compresseur comprimant le liquide dans une cuve dont la pression interne d'air est limitée à une valeur inférieure à 0,5 bar par au moins une soupape ; et un dispositif de surcompression entraîné par un moteur caractérisé en ce que ledit dispositif de surcompression est placé en liaison immédiate avec la sortie de cuve et que ledit dispositif de surcompression augmente la pression exercée sur le liquide dans la conduite par rapport à la pression qui est exercée sur le liquide dans la cuve.

Le moteur entraînant le dispositif de surcompression est de préférence un moteur hydraulique, pneumatique ou électrique, qui permet le réglage dudit dispositif à la pression de sortie souhaitée.

Avantageusement, le dispositif de surcompression est entraîné par un moteur pneumatique, alimenté via une canalisation reliée à un dispositif de réglage du taux de compression de l'air.

De préférence, le débit du liquide à la sortie du dispositif de surcompression est réglé au moyen du dispositif de réglage du taux de compression de l'air, agissant sur le régime du moteur pneumatique, d'une vanne ou des deux dispositifs simultanément.

Avantageusement, l'épandeur selon l'invention présente une pression exercée sur le liquide dans la conduite de sortie comprise entre 0,5 et 1 bar.

De manière extrêmement avantageuse, la pression exercée sur le liquide dans la conduite de sortie varie dans le même sens que la surpression d'air dans la cuve.

### Brève description des dessins

Les figures 1.1 à 1.5 représentent schématiquement différentes formes d'exécution d'un épandeur à pression selon l'invention.

La figure 2 représente schématiquement un circuit d'alimentation et de réglage du moteur du surcompresseur selon l'invention.

La figure 3 représente schématiquement une forme d'exécution alternative au circuit d'alimentation et de réglage du moteur de la figure 2.

### Description détaillée de l'invention

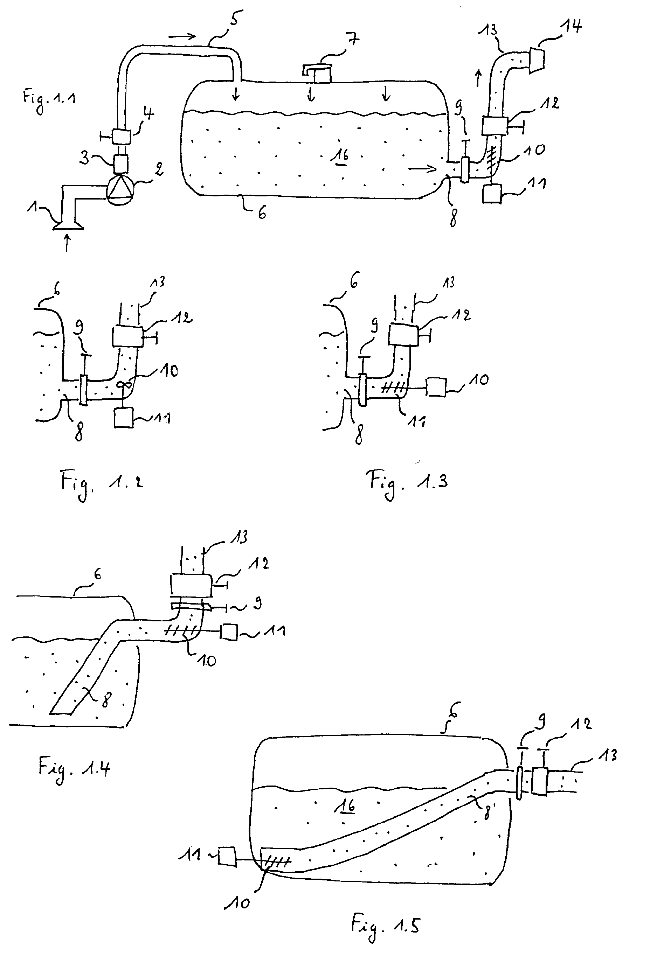

La figure 1.1 est une figure en coupe d'un épandeur à pression selon l'invention, fonctionnant en mode d'épandage. Il est évident que cette représentation est également valable pour le mode d'aspiration, à condition d'inverser les flèches indiquant le mouvement de l'air et du lisier.

L'air ambiant est aspiré via la bouche d'admission 1 par le compresseur 2. Le taux de compression de l'air est limité à une valeur inférieure à 0,5 bar par un clapet de surpression 3, qui est scellé. Ce taux de compression est ensuite réglé à une valeur comprise entre 0 et 0,5 bar au moyen d'une soupape réglable 4. L'air ainsi comprimé est acheminé via la conduite 5 vers la cuve 6, laquelle est également munie d'un clapet de surpression 7, scellé également, laissant s'échapper la pression égale ou excédentaire à 0,5 bar. Dans la cuve 6, l'air comprimé pousse le lisier 16 vers la sortie de cuve 8 commandée par une vanne 9. A sa sortie de la cuve, le flux de lisier est accéléré par un dispositif de surcompression 10, entraîné par un moteur 11, de telle sorte que le liquide soit soumis à la sortie dudit dispositif 10 à une pression supérieure ou égale à 0,5 bar. Une vanne 12 peut encore être installée après le dispositif 10 à des fins de réglage additionnel de la pression d'épandage. Le lisier est ensuite dirigé via la conduite 13 vers le dispositif d'épandage 14.

A titre d'exemple, le dispositif de surcompression 10 peut comprendre une hélice (figure 1.2), vis sans fin (figures 1.1, 1.3, 1.4 et 1.5) ou tout autre dispositif permettant d'augmenter la pression du flux au-delà de 0,5 bar.

Il est bien entendu que l'emplacement du surcompresseur ne revêt pas d'importance primordiale dans le cadre de l'invention tant que le dispositif de surcompression 10 suivant l'invention est lié à la sortie de cuve 8, comme l'illustrent les différents dessins de détail des figures 1.2 à 1.5.

De même, il est bien entendu que l'ordre de certains éléments sur le circuit d'air ou de lisier peut être permuté ou que certains éléments peuvent être combinés sans pour autant modifier l'invention.

A la figure 2, on montre que le moteur 11 du surcompresseur 10 peut être un moteur pneumatique qui serait alimenté par le circuit de compression de l'air lui-même, par exemple au moyen d'une conduite d'air comprimé 17 branchée sur la soupape de surpression 4, celle-ci permettant en outre de régler simultanément le taux de surcompression du flux de lisier en modifiant la vitesse de rotation du moteur pneumatique 11. Le réglage de pression à la sortie de la cuve, en vertu de l'invention, est en fait équivalent à un réglage de débit. Ce dernier s'obtient alors soit par réglage du régime du moteur 11 du surcompresseur 10 au moyen de la soupape 4, soit au moyen de la vanne 12, soit encore au moyen des deux dispositifs agissant simultanément. En particulier, l'épandeur selon l'invention permet avantageusement d'augmenter le taux de surcompression du lisier à la sortie de la cuve en même temps que la pression d'air dans la cuve, pour autant que la pression reste inférieure à 0,5 bar dans la cuve. Par exemple, pour une pression de cuve proche de 0,5 bar, on aura une surpression de sortie sur le lisier de l'ordre de 0,7 à 0,9 bar, c'est-à-dire finalement comparable à l'état de la technique.

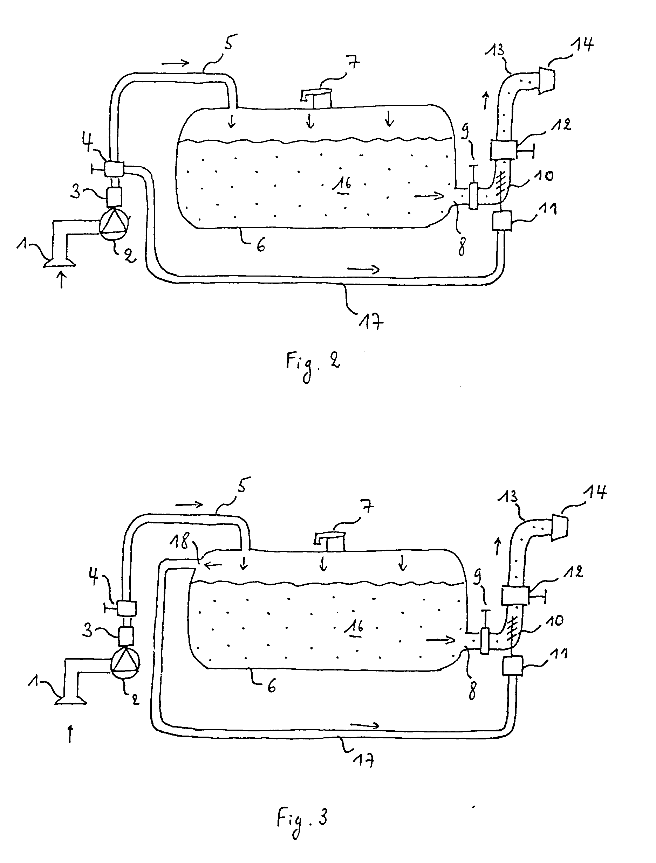

Sur la figure 3, on illustre que la conduite d'air comprimé 17 pourrait aussi être branchée sur la cuve 6 elle-même, à une sortie 18 ; la conduite d'air comprimé 17 pourrait alternativement être branchée sur la tuyauterie 5 (non dessiné), entre la soupape 4 et la cuve 6 ; dans ce cas, la soupape de surpression 4 permettrait aussi de régler simultanément le taux de surpression du flux d'air et celui du flux de lisier.

## Revendications

1. Epandeur de lisier ou autres matières d'épandage liquides (16) ; mettant en oeuvre, en mode d'épandage, un compresseur (2) comprimant le liquide (16) dans une cuve (6) dont la pression interne d'air est limitée à une valeur inférieure à 0,5 bar par au moins une soupape (3,7) ; et un dispositif de surcompression (10) entraîné par un moteur (11) caractérisé en ce que ledit dispositif de surcompression (10) est placé en liaison immédiate avec la sortie de cuve (8) et que ledit dispositif de surcompression (10) augmente la pression exercée sur le liquide (16) dans la conduite de sortie (13) par rapport à la pression qui est exercée sur le liquide dans la cuve (6).

2. Epandeur selon la revendication 1, caractérisée en ce que le moteur (11), de préférence hydraulique, pneumatique ou électrique, entraînant le dispositif de surcompression (10), permet le réglage dudit dispositif (10) à la pression de sortie souhaitée.

3. Epandeur selon la revendication 1 ou 2, caractérisé en ce que le dispositif de surcompression (10) est entraîné par un moteur pneumatique (11) alimenté via une canalisation (17), reliée à un dispositif de réglage du taux de compression de l'air (4).

4. Epandeur selon la revendication 3, caractérisé en ce que le débit du liquide (16) à la sortie du dispositif de surcompression (10) est réglé au moyen du dispositif de réglage du taux de compression de l'air (4), agissant sur le régime du moteur pneumatique (11).

5. Epandeur selon l'une quelconque des revendications précédentes, caractérisé en ce que le débit du liquide (16) à la sortie du dispositif de surcompression (10) est réglé au moyen d'une vanne (12).

6. Epandeur selon la revendication 4,
caractérisé en ce que le débit du liquide (16) à la sortie du dispositif de surcompression (10) est réglé additionnellement au moyen d'une vanne (12).

7. Epandeur selon l'une quelconque des revendications précédentes, caractérisé en ce que la pression exercée sur le liquide (16) dans la conduite de sortie (13) est comprise entre 0,5 et 1 bar.

8. Epandeur selon l'une quelconque des revendications 3 à 7, caractérisé en ce que la pression exercée sur le liquide (16) dans la conduite de sortie (13) varie dans le même sens que la surpression d'air dans la cuve (6).
